(19) Europäisches Patentamt
European Patent Office
Office européen des brevets

(11) **EP 2 776 270 B1**

(12) **FASCICULE DE BREVET EUROPEEN**

(45) Date de publication et mention
de la délivrance du brevet:
**03.02.2016 Bulletin 2016/05**

(21) Numéro de dépôt: **12781322.8**

(22) Date de dépôt: **07.11.2012**

(51) Int Cl.:
***B60L 7/18*** *(2006.01)*   ***B60L 15/20*** *(2006.01)*

(86) Numéro de dépôt international:
**PCT/EP2012/071957**

(87) Numéro de publication internationale:
**WO 2013/068361 (16.05.2013 Gazette 2013/20)**

(54) **ADAPTATION D'UNE CONSIGNE DE FREINAGE MOTEUR SIMULEE**

ANPASSUNG EINES SIMULIERTEN MOTORBREMSBEFEHLS

ADAPTATION OF A SIMULATED ENGINE-BRAKING INSTRUCTION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **08.11.2011 FR 1160158**

(43) Date de publication de la demande:
**17.09.2014 Bulletin 2014/38**

(73) Titulaire: **Renault S.A.S.**
**92100 Boulogne-Billancourt (FR)**

(72) Inventeurs:
• **GOUHIER, Nicolas**
**F-91430 Igny (FR)**
• **CHAZAL, Yann**
**F-75015 Paris (FR)**
• **VESPASIEN, Jean-Marie**
**F-94600 Choisy-le-Roi (FR)**
• **FOOT, Sébastien**
**F-78280 Guyancourt (FR)**
• **FRANCESCONI, Walter**
**F-27920 Saint Etienne Sous Bailleul (FR)**

(56) Documents cités:
**EP-A1- 0 754 588     WO-A1-2009/077835
US-A1- 2005 060 076     US-B1- 6 709 075**

**Description**

La présente invention concerne la simulation du freinage moteur notamment sur un véhicule à motorisation électrique, par exemple un véhicule électrique et/ou hybride.

Sur un véhiculé équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse, car, régénérative, elle permet de récupérer une partie de l'énergie cinétique du véhicule afin de recharger les batteries.

Ce freinage électrique peut être sollicité lorsque le conducteur appuie sur la pédale de frein, et aussi lorsque le conducteur lève le pied de la pédale d'accélération. Dans ce dernier cas, on parle de décélération sans freinage.

En particulier, le document FR2945243 décrit un procédé pour générer un tel frein moteur artificiel lorsque la pédale d'accélération n'est pas sollicitée. Le couple appliqué dépend notamment de la vitesse du véhicule et du niveau de charge de la batterie.

La plupart des véhicules sont équipés d'un ou plusieurs systèmes de sécurité actifs pour éviter les comportements non souhaités des roues. Par exemple, un véhicule peut comprendre un système d'antiblocage des roues, comme par exemple l'ABS (de l'allemand « AntiBlockerSystem »), et/ou un système d'anti-patinage des roues, comme par exemple un système ESP (de l'anglais 'Electronic Stability Program'). Ces systèmes de sécurité actifs sont en communication avec un ou plusieurs capteurs aptes à fournir des informations sur l'état des roues.

Les systèmes de sécurité actifs sont agencés pour passer dans un état de contrôle suite à certaines détections effectuées par le ou les capteurs.

Par exemple, les systèmes de sécurité actifs peuvent être agencés de façon à transmettre des signaux de commande pour contrôler des moyens de freinage hydrauliques, par exemple des plaquettes de frein. Par exemple, un système d'antiblocage des roues peut transmettre des signaux destinés à desserrer les plaquettes de frein, afin d'éviter le blocage des roues. Un système d'anti-patinage peut transmettre des signaux destinés à appliquer un freinage hydraulique sur telle ou telle roue afin d'assurer la stabilité du véhicule, notamment dans les virages.

Les systèmes de sécurité actifs peuvent aussi être agencés de façon à transmettre des signaux électroniques destinés au moteur. Par exemple, un système d'antiblocage des roues peut être agencé de façon à transmettre des requêtes de couple au moteur afin que le moteur accélère la rotation des roues. Un système d'anti-patinage peut être agencé de façon à transmettre des requêtes vers le moteur destinées à réduire le couple appliqué par le moteur. US2005060076 décrit un procédé de contrôle de freinage régénératif et intégrant un système de sécurité actif.

Sur les véhicules thermiques traditionnels, le niveau de freinage moteur est relativement faible, de sorte que ce freinage n'entraîne en général pas de réaction des systèmes de sécurité actifs.

Néanmoins, un freinage régénératif permet de récupérer de l'énergie. Aussi, dans le cas d'un véhicule équipé d'un moyen de freinage régénératif, est-il intéressant de simuler le freinage moteur avec un niveau de freinage relativement élevé.

Il a été envisagé d'intégrer dans un même véhicule un module de simulation de freinage moteur apte à élaborer des consignes de freinage moteur simulées destinées au moyen de freinage régénératif, et un ou plusieurs systèmes de sécurité actifs, par exemple ABS et/ou ESP.

Il a été envisagé de programmer le module de simulation de freinage moteur de sorte qu'il élabore des valeurs de consigne de freinage de moteur simulées correspondant à des valeurs de couple relativement élevées en valeur absolue. Néanmoins, on pourrait prévoir que ces valeurs de freinage élevées conduisent à un passage vers un état de contrôle d'un ou plusieurs systèmes de sécurité actifs.

Les signaux émis par le ou les systèmes de sécurité actifs prévaudraient alors sur les signaux émis par le module de simulation de freinage moteur. La valeur de couple de freinage moteur étant relativement élevée, on risque néanmoins d'avoir des transitions relativement brusques lors des passages d'un état à l'autre du ou des systèmes de sécurité actifs. Or la directibilité du véhicule est sensible non seulement au niveau de freinage appliqué, mais également aux variations du freinage appliqué. Ainsi lors des retours à l'état normal du système de sécurité actif, les transitions brutales du couple appliqué risquent de conduire à des réactivations du système de sécurité à l'état de contrôle.

Il existe donc un besoin pour un procédé qui permettrait d'éviter de telles oscillations, et de manière plus générale de concilier récupération d'énergie et sécurité.

Il est proposé un procédé d'adaptation de simulation de freinage moteur, pour un véhicule équipé d'un moyen de freinage régénératif, par exemple un moyen de freinage électrique. Ce procédé comprend :

- générer un signal de freinage arbitré, en fonction d'un signal de freinage moteur simulé élaboré à partir de signaux issus d'une pédale d'accélération, et en fonction d'au moins un signal issu d'au moins un système de sécurité actif,
- générer une consigne de freinage destinée au moyen de freinage régénératif, par filtrage temporel du signal de freinage arbitré.

Ainsi, ce filtrage peut permettre d'atténuer les trop brusques variations du signal arbitré, et donc d'assurer une meilleure directibilité. En particulier, ceci peut permettre d'éviter les successions d'activations/désactivations d'un ou plusieurs systèmes de sécurité actifs.

L'arbitrage peut notamment consister à choisir comme valeur de signal arbitré la valeur du signal simulé tant que le ou les systèmes de sécurité actifs sont dans leur état normal.

Avantageusement et de façon non limitative, on peut prévoir d'activer le filtrage lorsqu'un système de sécurité actif passe d'un état de contrôle à un état normal. Dit autrement, le procédé peut comprendre :

- pour au moins un système de sécurité actif, détecter le passage d'un état de contrôle vers un état normal,
- activer le filtrage suite à cette détection.

En effet, une coupure de régulation, par exemple d'un système ABS, ESP, MSR (de l'allemand « Motor Schlepp Regelung ») peut être susceptible de s'accompagner d'une transition brusque du signal arbitré à la valeur du signal de freinage moteur simulé issu d'un module de simulation.

Ce procédé peut ainsi permettre de concilier niveau de freinage moteur simulé élevé, sécurité du véhicule, et confort utilisateur.

Le filtrage temporel peut par exemple consister d'appliquer au signal arbitré un filtre linéaire d'ordre 1 en $e^{-\frac{t}{\tau}}$, un filtre de Bessel ou autre.

On pourra prévoir un filtrage linéaire ou non linéaire.

La constante de temps peut avantageusement être judicieusement choisie afin d'éviter le déclenchement d'une nouvelle régulation du système de sécurité, et tout en assurant un certain confort et une certaine répétabilité pour le conducteur.

Le procédé peut comprendre une étape de choix de filtrage à appliquer au signal arbitré en fonction d'au moins un signal issu d'au moins un système de sécurité. Par exemple, on peut choisir d'activer le filtrage lors des coupures de régulation d'un ou plusieurs système(s) de sécurité.

Avantageusement et de façon non limitative, le module de simulation peut être agencé de façon à calculer un couple de freinage moteur simulé en fonction d'un état de la pédale d'accélération, de sorte que ce couple simulé ait une valeur supérieure au couple de freinage équivalent qui serait obtenu avec un moteur thermique.

Avantageusement et de façon non limitative, le filtrage peut être réalisé en :

- une première phase avec une première constante de temps jusqu'à ce que la consigne de freinage atteigne une première valeur,
- une deuxième phase effectuée avec une deuxième constante de temps supérieure à la première constante de temps.

Ainsi, le procédé peut comprendre :

- effectuer un premier filtrage, correspondant à une première constante de temps, puis
- effectuer un deuxième filtrage correspondant à une deuxième constante de temps de valeur supérieure à celle de la première constante de temps.

Avantageusement, le procédé peut comprendre :

- détecter que la consigne de freinage atteint une première valeur,
- suite à cette détection, imposer le passage du premier au deuxième filtrage.

Cette première valeur peut avantageusement être inférieure en valeur absolue à la valeur de couple élaborée par le module de simulation. En particulier, cette première valeur peut être choisie égale ou sensiblement égale à une valeur de couple équivalente au freinage moteur qui serait obtenue avec un véhicule thermique.

Ainsi, en effectuant le filtrage en deux phases, on peut permettre de concilier le non déclenchement d'un système de sécurité actif et confort pour l'utilisateur. En effet, si le filtrage de la consigne de couple suite à une intervention d'un calculateur ABS/ESP est effectuée avec une constante de temps trop élevée, le conducteur peut avoir l'impression que le véhicule ne freine plus. Cette solution permet ainsi de revenir rapidement à une consigne de freinage régénératif à un niveau de freinage tel que l'on ne risque pas de déclencher un système de sécurité actif, et notamment un blocage des roues, avant de progressivement rejoindre le niveau de freinage final régénératif.

Avantageusement et de façon non limitative, on peut prévoir de désactiver le filtrage lorsque la valeur de consigne de freinage est suffisamment proche de la valeur du signal de freinage moteur simulé élaboré par le module de simulation.

Avantageusement et de façon non limitative, on peut en outre prévoir de désactiver le filtrage lorsqu'un ou plusieurs systèmes de sécurité actifs passent dans l'état de contrôle.

Avantageusement et de façon non limitative, on peut prévoir de désactiver le filtrage en cas de réception d'un signal issu de la pédale d'accélération correspondant à un appui sur la pédale, en particulier lorsque la consigne de couple issue de la pédale d'accélérateur excède la consigne de couple filtrée.

Le procédé décrit ci-dessus peut être implémenté de façon logicielle, en programmant certains composants de type processeur. Ce procédé est donc relativement simple à mettre en oeuvre et peu coûteux.

Il est en outre proposé un programme d'ordinateur comportant les instructions pour exécuter le procédé décrit ci-dessus. Ce programme peut être implémenté dans un processeur embarqué dans un véhicule automobile, par exemple un micro contrôleur, un DSP (de l'anglais « Digital Signal Processor ») ou autre.

Il est en outre proposé un dispositif d'adaptation de simulation de freinage moteur destiné à un véhicule équipé d'un moyen de freinage régénératif. Ce dispositif comprend :

- des moyens de réception, par exemple des ports d'entrée, des fils, des moyens de réception sans fil, ou autre, pour recevoir une valeur de signal de freinage moteur simulé issu d'un module de simulation et élaboré à partir de signaux issus d'une pédale d'accélération, et pour recevoir au moins un signal issu d'au moins un système de sécurité actif,
- un module d'arbitrage agencé pour générer un signal de freinage arbitré à partir des valeurs reçues par les moyens de traitement et
- des moyens de traitement pour générer une consigne de freinage destinée au moyen de freinage régénératif, par filtrage temporel du signal de freinage arbitré.

Le module d'arbitrage et/ou les moyens de traitement peuvent être intégrés dans, ou comprendre, un ou plusieurs processeurs.

Avantageusement et de façon non limitative, le dispositif peut être agencé de façon à choisir d'appliquer ou non le filtrage au signal arbitré en fonction d'au moins un des signaux issus du système de sécurité actif.

Ce dispositif peut intégrer ou non le module de simulation du freinage moteur, et/ou un ou plusieurs module de sécurité actifs du type ABS ou autre.

Ce dispositif peut ainsi être agencé de façon à mettre en oeuvre le procédé décrit ci-dessus. Notamment, ce dispositif peut être agencé pour élaborer une commande de freinage moteur destiné au moyen de freinage régénératif, par filtrage du signal arbitré.

Il est en outre proposé un système de freinage comprenant le dispositif d'adaptation décrit ci-dessus, et un dispositif de répartition. Ce dispositif de répartition (« Torque Blending » en anglais) est agencé pour calculer à partir d'une commande de freinage issue de la pédale de frein une commande de freinage régénératif destinée au moyen de freinage régénératif, et une commande de freinage hydraulique destinée au moyen de freinage hydraulique.

Le système de freinage et/ou le dispositif d'adaptation peuvent être intégré(s) ou comprendre un ou plusieurs moyens de traitement numérique de type processeur. Par exemple un microcontrôleur, un DSP, un microprocesseur, un FPGA (de l'anglais « Field Programmable Gate Array ») ou autre.

Il est en outre proposé un véhicule, par exemple un véhicule automobile, équipé d'un moyen de freinage régénératif et comprenant un dispositif d'adaptation et/ou un système de freinage tel(s) que décrit(s) ci-dessus. Ce véhicule peut par exemple être un véhicule électrique ou hybride.

D'autres caractéristiques détaillant davantage l'invention ressortiront plus clairement de la description donnée ci-après à titre indicatif et en relation avec les figures :

- La figure 1 montre schématiquement un exemple de dispositif de simulation selon un mode de réalisation de l'invention.
- La figure 2 montre deux graphes illustrant des exemples de variations au cours du temps d'un signal de drapeau d'un système de sécurité actif, un signal de couple estimé et une consigne de freinage correspondante.
- La figure 3 montre deux graphes illustrant des exemples de variations au cours du temps d'un signal de drapeau d'un système de sécurité actif, un signal de freinage moteur simulé et une consigne de freinage correspondante.

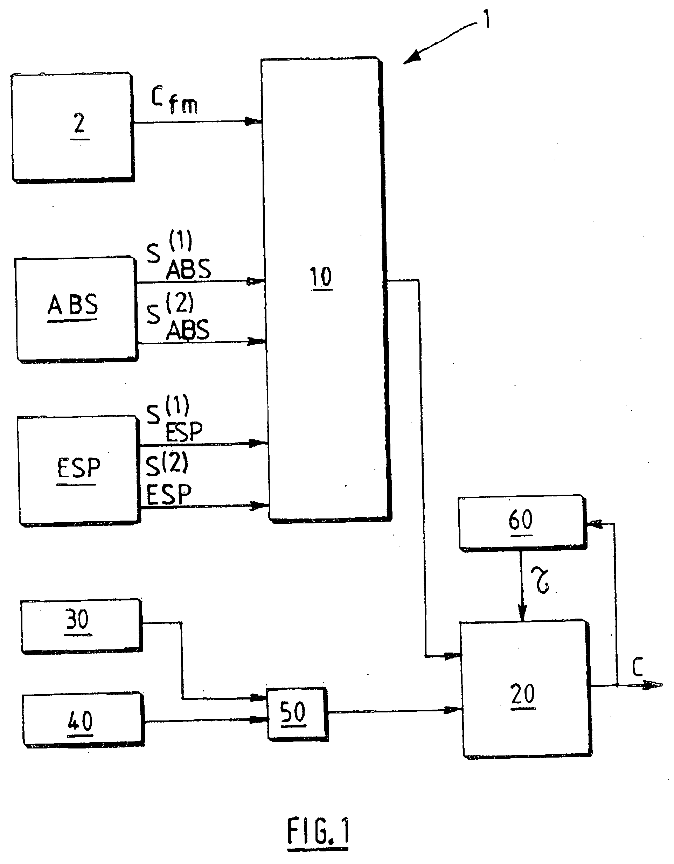

En référence à la figure 1, le dispositif 1 comprend un module d'arbitrage 10 recevant un signal de freinage moteur simulé $C_{fm}$ issu d'un module de simulation de freinage 2.

Ce module de simulation de freinage 2 peut par exemple implémenter le procédé décrit dans le document de brevet FR2945243, et ne sera pas décrit plus avant.

Le module 10 reçoit en outre des signaux $S_{ABS}^{(1)}$, $S_{ABS}^{(2)}$, $S_{ESP}^{(1)}$, $S_{ESP}^{(2)}$ issus de plusieurs systèmes de sécurité actifs ABS, ESP.

Par exemple, le module 10 reçoit des signaux $S_{ABS}^{(1)}$, $S_{ABS}^{(2)}$, issus d'un module ABS et des signaux $S_{ESP}^{(1)}$, $S_{ESP}^{(2)}$ issus d'un module ESP. Pour chacun des modules ABS, ESP, les signaux reçus comprennent un signal de commande de freinage hydraulique $S_{ABS}^{(1)}$, $S_{ESP}^{(1)}$ destiné au contrôle des plaquettes de frein, et un signal de commande de couple $S_{ABS}^{(2)}$, $S_{ESP}^{(2)}$ destiné au moteur.

Les systèmes de sécurité actifs ABS, ESP sont susceptibles de passer d'un état normal à un état de contrôle lorsque des signaux issus de capteurs non représentés permettent de détecter un risque, par exemple un risque de blocage des roues ou de patinage des roues.

Le module 10 est agencé de façon à réaliser un arbitrage entre le signal de freinage moteur $C_{fm}$ issu du module de simulation 2, et les signaux $S_{ABS}^{(1)}$, $S_{ABS}^{(2)}$, $S_{ESP}^{(1)}$, $S_{ESP}^{(2)}$ issus des systèmes de sécurité actifs ABS, ESP.

Plus précisément, lorsque le système ABS émet un signal $S^{(1)}_{ABS}$ en direction des plaquettes de frein afin de desserrer les freins, le module 10 élabore un signal arbitré choisi égal à 0. Ainsi, on n'effectue pas de simulation du freinage moteur lorsque le système ABS tend à vouloir desserrer des plaquettes de frein.

Il en va de même lorsque le système ESP émet un signal en direction des plaquettes de frein afin d'exercer un freinage.

Lorsque le système ABS ou le système ESP émet un signal $S^{(2)}_{ABS}$, $S^{(2)}_{ESP}$ en direction du moteur afin d'augmenter ou respectivement de diminuer le couple, le module 10 choisit comme signal arbitré $C_{arb}$ le signal issu des systèmes de sécurité ABS ou ESP correspondant.

Dit autrement, les signaux issus des systèmes de sécurité actifs prévalent sur le signal de freinage moteur simulé issues de la pédale d'accélérateur $C_{fm}$.

Ce module d'arbitrage 10 permet ainsi, de façon relativement simple de prendre en compte les signaux issus des systèmes de sécurité lors de l'application du freinage moteur simulé.

Néanmoins, le signal arbitré $C_{arb}$ est susceptible de varier brutalement.

Ces variations ne sont pas réellement préjudiciables lorsqu'elles font suite à un passage à l'état de contrôle des systèmes de sécurité actifs. En effet les systèmes de sécurité ABS et ESP émettent les signaux les plus adéquats par rapport à la situation réelle du véhicule, telle que reflétée par les capteurs.

En revanche, lorsque les systèmes ABS ou ESP passent de l'état de contrôle à l'état normal, le signal arbitré $C_{arb}$ passe d'une valeur contrôlée par le système de sécurité actif, par exemple une valeur nulle ou une valeur directement issue du système ABS ou ESP, à la valeur de consigne de couple issue de la pédale d'accélérateur $C_{fm}$.

Le dispositif 1 comporte un module de filtrage 20 pour appliquer un filtrage au signal arbitré $C_{arb}$ lors de telles transitions liées à une coupure d'un système de sécurité actif. Ce module 20 est agencé pour appliquer un filtrage linéaire d'ordre 1 en $e^{-\frac{t}{\tau}}$.

Le dispositif 1 comporte des modules 30, 40, 50 pour activer et désactiver le module de filtrage spécifique 20.

Le module 30 est agencé pour calculer des conditions d'activation de filtrage spécifique. Ce module 30 est ainsi agencé de façon à détecter les coupures de chacun des systèmes de sécurité actifs ABS, ESP. Ce module 30 peut par exemple recevoir un signal, pour chaque système de sécurité actif, un signal de drapeau (en anglais « flag ») indiquant un état de ce système de sécurité. Ce signal peut par exemple avoir des valeurs booléennes, chaque valeur correspondant à un état du système de sécurité actif.

Le système 30 peut être agencé de façon à émettre un signal d'activation du module de filtrage 20 en cas de fronts descendants de l'un des signaux de drapeau.

Le module 40 est agencé pour calculer des conditions de désactivation de filtrage spécifiques.

Ce module 40 peut par exemple comparer la valeur de consigne de couple finale C issue du module de filtrage 20 au signal $C_{fm}$ issu de la pédale d'accélérateur. S'il s'avère que la différence entre ces deux signaux de consigne est inférieure à un seuil, alors le module 40 peut émettre un signal de désactivation du filtrage.

Le module 40 peut en outre permettre d'implémenter d'autres tests.

Par exemple, lorsque l'un des systèmes de sécurité actifs passe dans l'état de contrôle, c'est-à-dire par exemple sur un front montant de l'un des signaux de drapeau, on peut prévoir de désactiver le filtrage courant, puisque le module d'arbitrage 10 permet aux signaux issus de ce système de sécurité actif de prévaloir par rapport à la consigne de couple $C_{fm}$ lorsque cela est nécessaire.

Le module 40 peut aussi être agencé de façon à désactiver le filtrage en cas d'appui sur la pédale d'accélération du conducteur, en particulier si la consigne de couple issue de la pédale d'accélération excède à la consigne de couple en sortie du module de filtrage 20.

Le module 50 permet d'élaborer, à partir des signaux d'activation issus du module 30 et des signaux de désactivation issus du module 40 un ordre d'activation commandant le module de filtrage 20.

Dans un mode de réalisation avantageux, un module 60 permet d'ajuster la constante de temps du filtre. Ce module 60 peut par exemple être programmé de façon à imposer une première constante de temps en début de filtrage, suite à un front montant de l'ordre d'activation issu du module 50 par exemple, et à comparer la consigne de couple C à une première valeur.

Cette première valeur peut avoir été estimée par simulation d'un couple de freinage moteur thermique. Cette première valeur est ainsi estimée de façon à correspondre au freinage moteur équivalent d'un véhicule thermique.

Ainsi, le module 20 permet d'effectuer un premier filtrage avec une constante de temps relativement courte jusqu'à ce que la consigne de couple C atteigne sensiblement cette première valeur. Puis, lorsque la consigne de couple C est suffisamment proche de cette première valeur simulée, par exemple lorsque la différence entre la valeur de la consigne C et la première valeur est inférieure à un seuil, le module 60 impose une deuxième constante de temps de filtrage 20. Le filtrage est alors beaucoup plus lent.

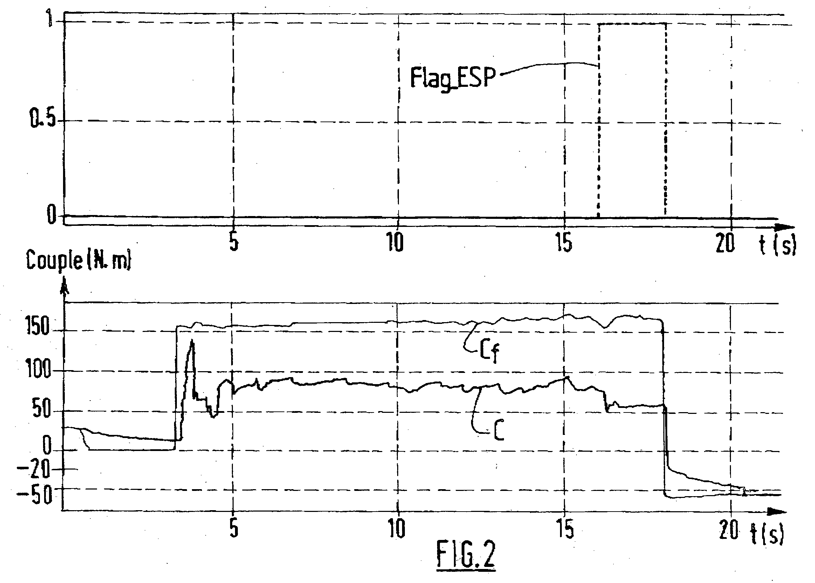

En référence à la figure 2, le graphe du dessous montre l'évolution au cours du temps :

- d'un signal de couple estimé $C_f$, issu notamment d'un module de simulation, et exprimé ici en Newton.mètre. En cas d'appui sur la pédale d'accélération, ce couple estimé a une valeur positive car on attend du moteur qu'il fasse tourner les roues. En revanche, en cas de lever de pied, ce couple a une valeur négative, égale à une valeur de freinage moteur simulée, car on attend alors du moteur qu'il récupère de l'énergie en freinant les roues.

- de la consigne de freinage C affectivement appliquée au moyen de freinage régénératif, obtenue notamment par filtrage, et exprimée ici en Newton.mètre.

Le graphe du dessus montre l'évolution au cours du temps d'un signal de drapeau Flag_ESP représentatif de l'état d'un système ESP.

Dans cet exemple, l'instant t=18 secondes environ correspond à un lever de pied de la pédale d'accélération, de la part du conducteur.

Le système ESP, alors dans un état de contrôle, retourne à son état normal suite à ce lever de pied. Ceci est illustré par le front descendant du signal Flag_ESP.

Ce lever de pied entraine également une importante variation du signal de couple estimé $C_f$.

Suite au front descendant du signal Flag_ESP, le dispositif d'adaptation de freinage impose un filtrage du signal arbitré $C_{arb}$, égal au signal de freinage moteur simulé $C_{fm}$. Ce filtrage s'effectue en deux phases :

- une première phase de filtrage, relativement courte, au cours de laquelle le signal C atteint rapidement une première valeur ici sensiblement égale à -20N. m.
- une deuxième phase de filtrage, correspondant à une constante de temps plus élevée que celle de la première phase de filtrage.

Cette deuxième phase dure ici jusqu'à t=20,5 secondes environ. Le module 40 sur la figure 2 est en effet agencé pour émettre un signal de désactivation de filtrage lorsque le signal C est suffisamment proche du signal de freinage moteur simulé $C_{fm}$. Plus précisément, le signal filtré C est régulièrement comparé au signal de freinage moteur simulé $C_{fm}$ ; si la différence entre ces signaux est inférieure à un seuil, un signal de désactivation de filtrage est émis. Le signal C devient alors égal au signal de freinage moteur simulé $C_{fm}$.

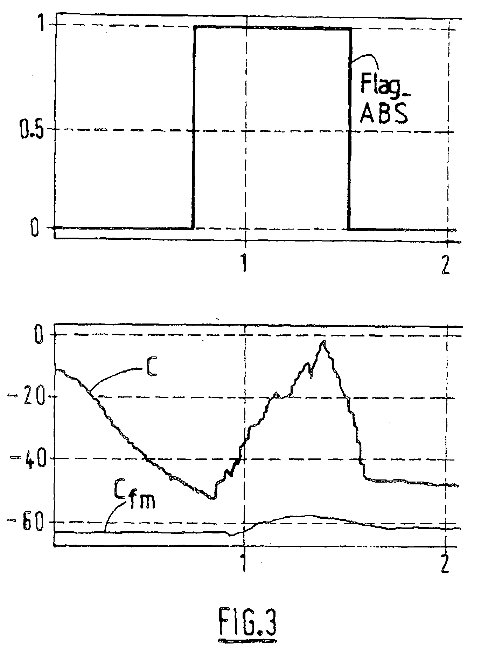

En référence à la figure 3, les graphes représentés correspondent à une situation de lever de pied permanente.

La courbe Flag_ABS est un signal de drapeau indiquant que le système ABS envoie des signaux électroniques destinés au moteur, afin que le moteur accélère la rotation des roues ou tout au moins limite la récupération d'énergie.

La courbe $C_{fm}$ correspond au signal de freinage moteur simulé, à partir de l'état de la pédale d'accélération et de la vitesse du véhicule. Ici, on est en situation de lever de pied, et ce signal simulé a donc des valeurs relativement faibles.

La courbe C correspond la consigne de freinage C affectivement appliquée au moyen de freinage régénératif.

Les signaux $C_{fm}$ et C sont ici exprimé en Newton.mètre.

Le module de simulation est agencé de façon à délivrer un signal simulé avec des valeurs relativement élevées en valeurs absolues. Dit autrement, le freinage moteur simulé est plus fort que le freinage moteur qui serait obtenu avec un véhicule thermique. Ceci permet de récupérer davantage d'énergie, favorisant ainsi l'autonomie du véhicule.

Néanmoins, cette application d'un freinage relativement fort est davantage susceptible de conduire à un blocage des roues. Le système ABS est susceptible de se placer dans un état de contrôle, comme représenté par le front montant du signal Flag_ABS à t=0,7 seconde environ.

Le module d'arbitrage choisit alors de piloter le moteur avec les signaux électroniques émis par le système ABS en direction du moteur plutôt qu'avec le signal de freinage simulé. Ces signaux électroniques du système ABS permettent de limiter le freinage effectif.

Lorsque le système ABS estime que le risque de blocage est roues est suffisamment faible, il revient à l'état normal. Ceci est illustré par le front descendant du signal de drapeau Flag_ABS.

Le module d'arbitrage génère alors un signal arbitré égal au signal simulé $C_{fm}$.

Le dispositif d'adaptation effectue alors un filtrage du signal arbitré :

- d'abord un filtrage avec une constante de temps relativement courte, jusqu'à ce que le signal filtré C atteigne une valeur de -47 N.m environ,
- puis un filtrage avec une constante de temps plus élevée. Cette deuxième phase de filtrage peut durer plus longtemps que la première phase de filtrage et n'est ici pas terminée à t=2 secondes.

## Revendications

1. Procédé d'adaptation de simulation de freinage moteur, pour un véhicule équipé d'un moyen de freinage régénératif, apte à freiner le véhicule en fonction d'une consigne de freinage (C) appliquée audit moyen de freinage régénératif et intégrant en outre au moins un système de sécurité actif, ledit procédé comprenant : ,

   - générer un signal de freinage arbitré ($C_{arb}$), en fonction d'un signal de freinage moteur simulé ($C_{fm}$) élaboré à partir de signaux issus d'une pédale d'accélération, et en fonction d'au moins un signal $( S_{ABS}^{(1)} , S_{ABS}^{(2)} , S_{ESP}^{(1)} , S_{ESP}^{(2)} )$ issu

dudit au moins un système de sécurité actif,
- détecter, pour au moins un système de sécurité actif, le passage d'un état de contrôle vers un état normal, où ledit signal arbitré passe d'une valeur contrôlée par ledit système de sécurité actif à une valeur de consigne de couple issue de la pédale d'accélération,
- activer un filtrage temporel audit signal arbitré suite à ladite détection, pour générer ladite consigne de freinage (C) effectivement appliquée audit moyen de freinage régénératif.

2. Procédé selon la revendication 1, dans lequel, au cours de l'étape de filtrage, on choisit comme valeur de signal arbitré ($C_{arb}$) la valeur du signal simulé ($C_{fm}$) tant que chaque système de sécurité actif est dans un état normal.

3. Procédé selon l'une des revendications 1 ou 2, comprenant:

   - effectuer un premier filtrage, correspondant à une première constante de temps, puis
   - effectuer un deuxième filtrage correspondant à une deuxième constante de temps de valeur supérieure à celle de la première constante de temps.

4. Procédé selon la revendication 3, comprenant en outre :

   - détecter que la consigne de freinage (C) atteint une première valeur,
   - suite à cette détection, imposer le passage du premier au deuxième filtrage.

5. Procédé selon la revendication 4, dans lequel la première valeur est égale ou sensiblement égale à une valeur de couple équivalente au freinage moteur qui serait obtenue avec un véhicule thermique.

6. Programme d'ordinateur comportant les instructions pour exécuter le procédé selon l'une des revendications 1 à 5.

7. Dispositif (1) d'adaptation de simulation de freinage moteur destiné à un véhicule équipé d'un moyen de freinage régénératif apte à freiner le véhicule en fonction d'une consigne de freinage (C) appliquée audit moyen de freinage régénératif et intégrant en outre au moins un système de sécurité actif, ledit dispositif comprenant :

   - des moyens de réception pour recevoir une valeur de signal de freinage moteur simulé issu d'un module de simulation et élaboré à partir de signaux issus d'une pédale d'accélération, et pour recevoir au moins un signal issu dudit au moins un système de sécurité actif,
- un module d'arbitrage (10) agencé pour générer un signal de freinage arbitré à partir des valeurs reçues par les moyens de réception
- des moyens de traitement (20) pour générer ladite consigne de freinage effectivement appliquée audit moyen de freinage régénératif, par filtrage temporel du signal de freinage arbitré, et un module d'activation (30) agencé pour détecter des coupures de chacun des systèles de sécurité et pour émettre un signal d'activation desdits moyens de traitement (20) suite à ladite détection, propre à activer ledit filtrage temporel.

8. Véhicule comprenant au moins un moyen de freinage régénératif et un dispositif d'adaptation selon la revendication 7.

**Patentansprüche**

1. Verfahren zur Anpassung der Motorbremssimulation für ein Fahrzeug, das mit einem Mittel zum regenerativen Bremsen ausgestattet ist, das dazu in der Lage ist, das Fahrzeug basierend auf einem Bremsbefehl (C), der auf das Mittel zum regenerativen Bremsen angewendet wird, zu bremsen, und in das des Weiteren mindestens ein aktives Sicherheitssystem integriert ist, wobei das Verfahren Folgendes umfasst:

   - Erzeugen eines arbitrierten Bremssignals ($C_{arb}$) basierend auf einem simulierten Motorbremssignal ($C_{fm}$), das aus von einem Fahrpedal ausgegebenen Signalen erstellt wird, und basierend auf mindestens einem Signal ($S_{ABS}^{(1)}$, $S_{ABS}^{(2)}$, $S_{ESP}^{(1)}$, $S_{ESP}^{(2)}$), das von dem mindestens einen aktiven Sicherheitssystem ausgegeben wird,
   - Detektieren, für mindestens ein aktives Sicherheitssystem, des Wechsels von einem Steuerzustand zu einem Normalzustand, wobei das arbitrierte Signal von einem von dem aktiven Sicherheitssystem gesteuerten Wert zu einem vom Fahrpedal ausgegebenen Wert des Drehmomentbefehls wechselt,
   - Aktivieren einer zeitlichen Filterung des arbitrierten Signals nach der Detektion, um den Bremsbefehl (C) zu erzeugen, der effektiv an das Mittel zum regenerativen Bremsen angelegt wird.

2. Verfahren nach Anspruch 1, wobei im Verlauf des Filterungsschritts als Wert des arbitrierten Signals ($C_{arb}$) der Wert des simulierten Signals ($C_{fm}$) gewählt wird, während sich jedes aktive Sicherheitssystem in einem Normalzustand befindet.

3. Verfahren nach einem der Ansprüche 1 oder 2, das Folgendes umfasst:

   - Durchführen einer ersten Filterung entsprechend einer ersten Zeitkonstanten, dann
   - Durchführen einer zweiten Filterung entsprechend einer zweiten Zeitkonstanten, deren Wert über dem der ersten Zeitkonstanten liegt.

4. Verfahren nach Anspruch 3, das ferner Folgendes umfasst:

   - Detektieren, dass der Bremsbefehl (C) einen ersten Wert erreicht hat,
   - als Folge dieser Detektion Bewirken des Wechsels von der ersten auf die zweite Filterung.

5. Verfahren nach Anspruch 4, wobei der erste Wert gleich oder im Wesentlichen gleich einem Drehmomentwert ist, der einer Motorbremsung entspricht, die mit einem Brennkraftfahrzeug erhalten würde.

6. Computerprogramm, das die Anweisungen zum Ausführen des Verfahrens nach einem der Ansprüche 1-5 umfasst.

7. Vorrichtung (1) zur Anpassung der Motorbremssimulation, die für ein Fahrzeug bestimmt ist, das mit einem Mittel zum regenerativen Bremsen ausgestattet ist, das dazu in der Lage ist, das Fahrzeug basierend auf einem Bremsbefehl (C), der auf das Mittel zum regenerativen Bremsen angewendet wird, zu bremsen, und in das des Weiteren mindestens ein aktives Sicherheitssystem integriert ist, wobei die Vorrichtung Folgendes umfasst:

   - Empfangsmittel zum Empfangen eines simulierten Wertes des Motorbremssignals, das von einem Simulationsmodul ausgegeben wird und aus von einem Fahrpedal ausgegebenen Signalen erstellt wird, und zum Empfangen mindestens eines Signals, das von dem mindestens einen aktiven Sicherheitssystem ausgegeben wird,
   - ein Arbitrierungsmodul (10), das zur Erzeugung eines arbitrierten Bremssignals ausgehend von durch die Empfangsmittel empfangenen Werten angeordnet ist,
   - Verarbeitungsmittel (20) zum Erzeugen des Bremsbefehls, der effektiv an das Mittel zum regenerativen Bremsen angelegt wird, durch zeitliche Filterung des arbitrierten Bremssignals, und ein Aktivierungsmodul (30), das zum Detektieren von Unterbrechungen jedes der Sicherheitssysteme und zum Ausgeben eines Signals zur Aktivierung der Verarbeitungsmittel (20) als Folge der Detektion, um die zeitliche Filterung zu aktivieren, angeordnet ist.

8. Fahrzeug, das mindestens ein Mittel zum regenerativen Bremsen und eine Anpassungsvorrichtung nach Anspruch 7 umfasst.

**Claims**

1. Method for adapting the engine-braking simulation for a vehicle provided with a regenerative braking means capable of braking the vehicle based on a braking instruction (C) applied to said regenerative braking means and additionally incorporating at least one active safety system, said method comprising:

   - generating an arbitrated braking signal ($C_{arb}$) based on a simulated engine-braking signal ($C_{fm}$) developed on the basis of signals output from an acceleration pedal, and based on at least one signal ($S_{ABS}^{(1)}$, $S_{ABS}^{(2)}$, $S_{ESP}^{(1)}$, $S_{ESP}^{(2)}$) output from said at least one active safety system,
   - detecting, for at least one active safety system, the switching from a control state to a normal state, where said arbitrated signal switches from a value controlled by said active safety system to a torque instruction value output from the acceleration pedal,
   - activating a time filtration of said arbitrated signal following said detection in order to generate said braking instruction (C) effectively applied to said regenerative braking means.

2. Method according to Claim 1, wherein, during the filtration step, the value of the simulated signal ($C_{fm}$) whilst each active safety system is in a normal state is selected as the value of the arbitrated signal ($C_{arb}$).

3. Method according to one of Claims 1 or 2, comprising:

   - performing a first filtration, corresponding to a first time constant, then
   - performing a second filtration corresponding to a second time constant having a value greater than that of the first time constant.

4. Method according to Claim 3, further comprising:

   - detecting whether the braking instruction (C) reaches a first value,
   - following this detection, enforcing the switching from the first to the second filtration.

5. Method according to Claim 4, wherein the first value is equal or substantially equal to a torque value equivalent to the engine braking that would be obtained with a combustion vehicle.

6. Computer program comprising the instructions for executing the method according to one of Claims 1 to 5.

7. Device (1) for adapting the engine-braking simulation, intended for a vehicle provided with a regenerative braking means capable of braking the vehicle based on a braking instruction (C) applied to said regenerative braking means and additionally incorporating at least one active safety system, said device comprising:

    - receiving means for receiving a simulated engine-braking signal value output from a simulation module and developed on the basis of signals output from an acceleration pedal, and for receiving at least one signal output from said at least one active safety system,
    - an arbitration module (10) set up to generate an arbitrated braking signal on the basis of the values received by the receiving means,
    - processing means (20) for generating said braking instruction effectively applied to said regenerative braking means by time filtration of the arbitrated braking signal, and an activation module (30) set up to detect interruptions of each of the safety systems and to emit a signal for activating said processing means (20) following said detection and suitable for activating said time filtering.

8. Vehicle comprising at least one regenerative braking means and an adaptation device according to Claim 7.

FIG.1

Flag_ESP

Couple (N.m)

Cf

C

FIG.2

FIG.3

**EP 2 776 270 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2945243

- US 2005060076 A